# FASCICULE DE BREVET EUROPEEN

(11) **EP 0 356 288 B1**
(45) Date de publication et mention de la délivrance du brevet: **21.07.1993**
(21) Numéro de dépôt: 89402193.0
(22) Date de dépôt: 02.08.1989
(51) Int. Cl.: G02F 1/133

(54) **Procédé et dispositif d'éclairage arrière d'un écran matriciel à cristal liquide**
Verfahren und Vorrichtung zur Hinterbeleuchtung einer Matrix-Flüssigkristallanzeige
Method and device for back-lighting a liquid-crystal matrix screen

(30) Priorité: 09.08.1988 FR 8810731
(43) Date de publication de la demande: 28.02.1990
(73) Titulaire: THOMSON-CSF, 75008 Paris (FR)
(72) Inventeur: Barbier, Bruno, F-92045 Paris la Défense (FR)
(74) Mandataire: Courtellemont, Alain

(56) Documents cités:
- EP-A- 0 246 128
- FR-A- 2 516 335
- FR-A- 2 584 845

## Description

La présente invention concerne un procédé d'éclairage arrière d'un écran matriciel de visualisation à cristal liquide, ainsi que le dispositif d'éclairage à tubes fluorescents mis en oeuvre selon le procédé.

Les écrans ou panneaux à cristal liquide, (en anglais LCD, abréviation de Liquid Crystal Display), sont des modulateurs de lumière dont la transmission de chacun des symboles à représenter est commandé électriquement. Les écrans matriciels sont constitués de points (ou pixels) répartis régulièrement en X et en Y sur toute la surface et qui sont commandés électriquement par un réseau matriciel de fils conducteurs en lignes et colonnes. L'image est rafraîchie périodiquement à une cadence de trame, le balayage s'effectuant ligne par ligne à une cadence de ligne. Pour un écran matriciel à N lignes au total, l'information électrique d'excitation est apportée aux pixels successifs d'une même ligne pendant un temps T/N, T étant la durée totale de balayage de l'écran ou durée trame. Durant l'intervalle de temps restant, c'est-à-dire T(1-1/N) de chaque trame, les pixels ne sont pas excités. A cette variation périodique de tension d'excitation correspond consécutivement une ondulation de la transmission optique qui provoque un effet visuel de papillotement (flicker en anglais) d'autant plus visible que la fréquence de rafraîchissement est basse. Ce phénomène croît également avec la température.

Lorsque la transmission maximale réalisable, en particulier pour les écrans polychromes, est faible, il est préférable d'utiliser un dispositif d'éclairage à l'arrière de l'écran, plutôt qu'un diffuseur-réflecteur qui réfléchit l'éclairage ambiant.

Ce dispositif d'éclairage arrière est usuellement réalisé à l'aide de tubes fluorescents. Pour obtenir une bonne uniformité de luminance sur toute la face arrière de l'écran et une haute luminance il est nécessaire d'utiliser un montage de plusieurs tubes généralement disposés en parallèle. L'uniformité ou homogénéité, peut être améliorée en utilisant un diffuseur placé entre les tubes et l'écran ainsi qu'un réflecteur disposé à l'arrière des tubes.

Pour modifier l'éclairage, il est possible de commander la luminance des tubes fluorescents.

Une technique connue décrite dans le document FR-A-2 516 335, consiste à utiliser un convertisseur continu-alternatif, ou onduleur, qui, à partir d'une basse tension continue, délivre aux tubes une tension alternative haute fréquence de quelques centaines de volts prévue pour amorcer les tubes fluorescents à chaque alternance. Suivant cette technique, la variation de luminance moyenne des tubes est obtenue en modulant par tout ou rien, de manière périodique à une cadence basse fréquence, la tension alternative haute fréquence appliquée aux tubes. A cet effet une impulsion à modulation de durée réglable est produite ; elle permet de faire varier l'intensité moyenne du courant électrique dans les tubes et consécutivement la luminance des tubes. Cette impulsion est répétée à la cadence basse fréquence. Si la basse fréquence de modulation est choisie suffisamment haute (une ou plusieurs centaines de Hertz), l'ondulation temporelle de luminance qui en résulte est suffisamment rapide pour ne pas être visible.

Cette technique connue ne supprime pas toutefois l'effet de papillotement du à la fréquence de rafraîchissement qui est assez basse et qui peut avoir une période par exemple de 10 à 20 millisecondes.

Il est à noter qu'il est connu par le document FR-A 2 584 845 de réaliser un dispositif d'éclairage arrière d'un écran matriciel à cristal liquide commandé de façon que la quantité de lumière de l'éclairage de fond soit synchronisée sur un instant auquel un signal d'écriture est appliqué à des éléments d'image situés sur au moins une ligne de l'écran. Cette technique laisse subsister un effet de papillotement car la correction est faite de façon globale pour tout l'écran et ne tient donc pas compte du fait que le rafraîchissement des lignes de l'écran n'est pas effectué simultanément mais à la suite.

Le but de l'invention est d'éviter ou, pour le moins, de réduire fortement ce phénomène de papillotement dû à la fréquence de rafraîchissement. Ceci est obtenu en utilisant une modulation temporelle particulière de la luminance de chacun des tubes fluorescents et en disposant ces tubes parallèlement à la direction des lignes.

Selon l'invention, un procédé d'éclairage arrière d'un écran matriciel à cristal liquide utilisant M tubes fluorescents, où M est un entier supérieur à 1, pour éclairer l'arrière de l'écran et, pour chaque tube, une commande impulsionnelle périodique basse fréquence avec une largeur d'impulsion réglable pour moduler l'alimentation haute fréquence du tube considéré et faire varier sa luminance, est caractérisé en ce que les tubes sont arrangés en une suite, parallèlement à la direction des llgnes de la matrice, chaque tube éclairant une plage faite de lignes successives de pixels de l'écran, en ce que la variation de la largeur d'impulsion est déterminée pour obtenir un éclairage arrière temporellement variable et est synchronisée avec le balayage ligne par ligne des pixels de la matrice, et en ce que, pour cela, les tubes sont alimentés avec des décalages de T/M entre deux tubes consécutifs de la suite, T étant la période de rafraîchissement d'image, et une modulation de la largeur d'impulsion est déterminée, pour chaque tube, de manière que sa luminance soit sensiblement en opposition de phase avec la transmission optique moyenne de la plage de pixels éclairée par le tube considéré, afin d'obtenir en sortie de ladite plage et en considérant tous les pixels excités, une luminance sensiblement uniforme.

Selon l'invention, un dispositif d'éclairage arrière d'un écran matriciel à cristal liquide comportant M tubes fluorescents, où M est un entier supérieur à 1, pour éclairer l'arrière de l'écran, et pour commander l'intensité lumineuse, de chacun des tubes, un générateur haute fréquence pour élaborer, à partir d'une tension continue locale, une tension d'alimentation alternative haute fréquence, et des moyens de modulation par tout ou rien de la tension d'alimentation haute fréquence pour obtenir une commande impulsionnelle périodique basse fréquence avec une largeur d'impulsion réglable, est caractérisé en ce que les tubes sont disposés parallèlement à la direction des lignes de l'écran matriciel, chacun des tubes étant associé à son propre générateur haute fréquence et à des moyens de modulation, et en ce que le dispositif comporte en outre un générateur de signaux de commande des tubes pour produire, à la période T de rafraîchissement d'image de l'écran , M signaux de commande avec des déphasages entre eux de T/M, respectivement appliqués aux moyens de modulation, en sorte que l'ondulation de luminance de chaque tube soit en opposition de phase avec la transmission optique moyenne procurée par les pixels de la matrice situés en regard du tube considéré.

La présente invention sera mieux comprise et d'autres caractéristiques apparaîtront à l'aide de la description qui suit et des figures annexées qui représentent :
- Fig.1, un schéma simplifié d'un dispositif d'éclairage arrière d'écran matriciel, conforme à l'invention,
- Fig.2, des courbes relatives au fonctionnement du dispositif dans le cas d'un éclairage arrière de luminance fixe,
- Fig.3, les mêmes courbes de fonctionnement illustrant le cas d'un éclairage arrière de luminance variable,
- Fig.4, des courbes montrant la variation périodique de transmission et de luminance d'un pixel d'écran matriciel,
- Figs.5 et 6, des schémas illustrant le rôle joué par plusieurs tubes voisins dans la luminance transmise par un pixel,
- Figs.7 et 8, des schémas illustrant la plage de pixels à prendre en compte par suite de la résolution visuelle,
- Fig.9, des courbes de variation périodique de luminance dans le concept des figures 7 et 8,
- Fig.10, des courbes illustrant la luminance à créer opposée à la transmission optique des pixels pour obtenir une luminance résultante sensiblement constante,
- Fig.11, un schéma montrant les plages de lignes d'un écran matriciel éclairé par des tubes fluorescents,
- Fig.12, des courbes illustrant la répartition temporelle des signaux de commande d'alimentation des tubes et leur déphasage relatif pour obtenir le résultat désiré,
- Fig.13, un hloc diagramme d'un dispositif d'éclairage arrière d'un écran matriciel à cristal liquide conforme à l'invention,
- Fig.14, un exemple de réalisation des circuits du dispositif selon la figure 13,
- Fig.15, ces courbes de fonctionnement relatives aux circuits de la figure 14.

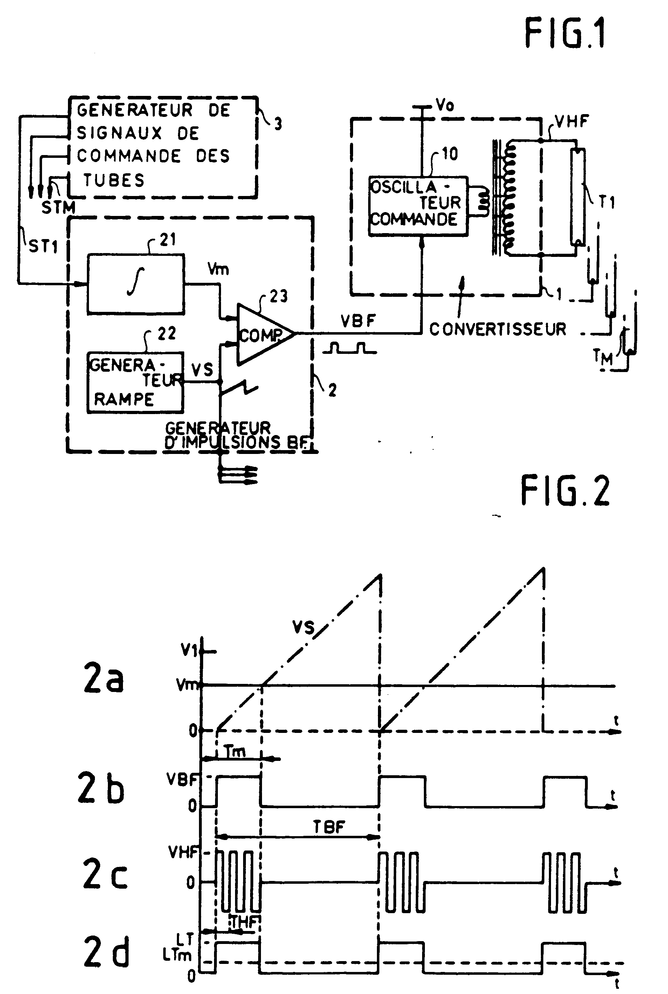

Le schéma simplifié de la figure 1, représente la commande de luminance d'un tube fluorescent T1. Cette commande est répétée pour les M-1 autres tubes d'une suite, T1 à TM, de M tubes fluorescents utilisés pour éclairer, par l'arrière, un écran matriciel et disposés parallèlement aux lignes de pixels de l'écran matriciels. La luminance est produite par un circuit d'alimentation haute fréquence 1 qui comporte un onduleur ou convertisseur alimenté en continu par une tension V0 pour délivrer au tube T1 une tension haute fréquence de période THF (Fig.2c) de forme sinusoïdale ou carrée par exemple. Le convertisseur reçoit un signal de commande à basse fréquence VBF pour faire varier la luminance du tube fluorescent. Le signal VBF est une commande impulsionnelle périodique basse fréquence (Fig.2b) ayant un taux de découpe TBF/Tm réglable pour moduler l'alimentation haute fréquence du tube. Le circuit 1 comporte à cet effet un oscillateur 10 commandé par tout ou rien par le signal VBF. La tension de modulation VBF du convertisseur HF est produite par un générateur d'impulsions basse fréquence 2 à partir d'un signal de commande ST provenant d'un générateur 3. Dans l'état de la technique précité le signal ST est une tension continue (Fig.2a) dont on peut faire varier le niveau et qui est appliquée à travers un intégrateur 21 à une première entrée d'un comparateur 23 qui reçoit par une deuxième entrée une tension de rampe à la sortie d'un générateur 22. Le générateur de rampe produit une rampe 22 VS à la cadence basse fréquence (Fig.2a). La tension Vm à la sortie de l'intégrateur 21 est comparée au signal de rampe et permet de produire le signal VBF (Fig.2b). La variation de la tension ST entraîne consécutivement celle de Vm, et permet de faire varier la largeur Tm de l'impulsion des signaux rectangulaires basse fréquence VBF. Ce signal de fréquence fixe 1/TBF et de tension crête VBF module par tout ou rien la tension VHF délivrée au tube. La luminance LT du tube est modulée dans le temps de façon correspondante (Fig.2d). La valeur LTm représente la luminance moyenne présentée par le tube.

Les signaux sont représentés sur la figure 2 pour une valeur constante du signal de commande ST.

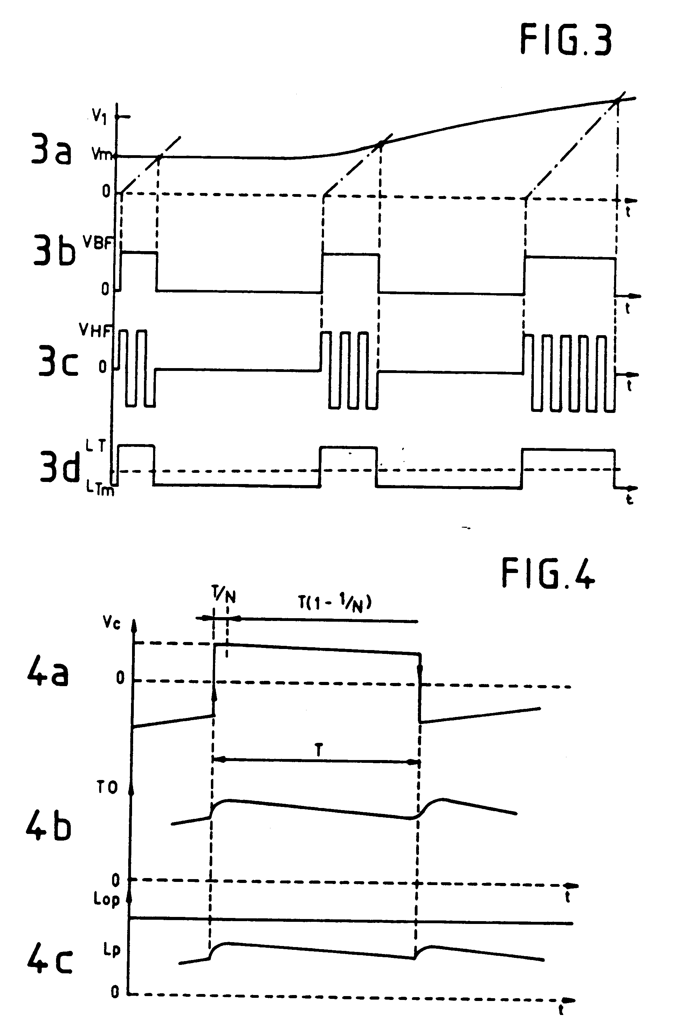

La figure 3 représente les mêmes signaux pour une variation du signal de commande ST ce qui permet de faire varier la valeur de la durée de modulation Tm et consécutivement, la durée d'application du signal haute fréquence d'alimentation et donc la luminance moyenne LTm du tube.

La figure 4a représente la tension de commande Vc appliquée à un pixel d'un panneau matriciel de N lignes, balayé séquentiellement pendant une durée d'image T. La figure 4b représente la transmission optique TO du pixel, dans le cas où celle-ci est une fonction croissante de la valeur efficace de la tension de commande. Son ondulation temporelle est pondérée par des constantes élastiques et visqueuses présentées par le cristal liquide.

La figure 4c représente la luminance Lp du pixel qui est égale à la luminance arrière Lop due aux tubes fluorescents éclairant ce pixel et multipliée par la transmission optique TO du pixel.

La moyenne temporelle de la transmission optique des pixels constituant l'image peut varier suivant le pixel ou la plage considéré d'une valeur minimale TOmin (pour réaliser une luminance minimale) à une valeur TOmax (pour réaliser une luminance maximale) ; cette variation est obtenue en modifiant l'amplitude de la tension de commande Vc propre à chaque pixel.

Dans ce qui suit (notamment dans les représentations des figures 4, 9 et 10) on considère les formes d'ondes relatives à une valeur unique intermédiaire (moyenne par exemple) entre ces valeurs extrêmes.

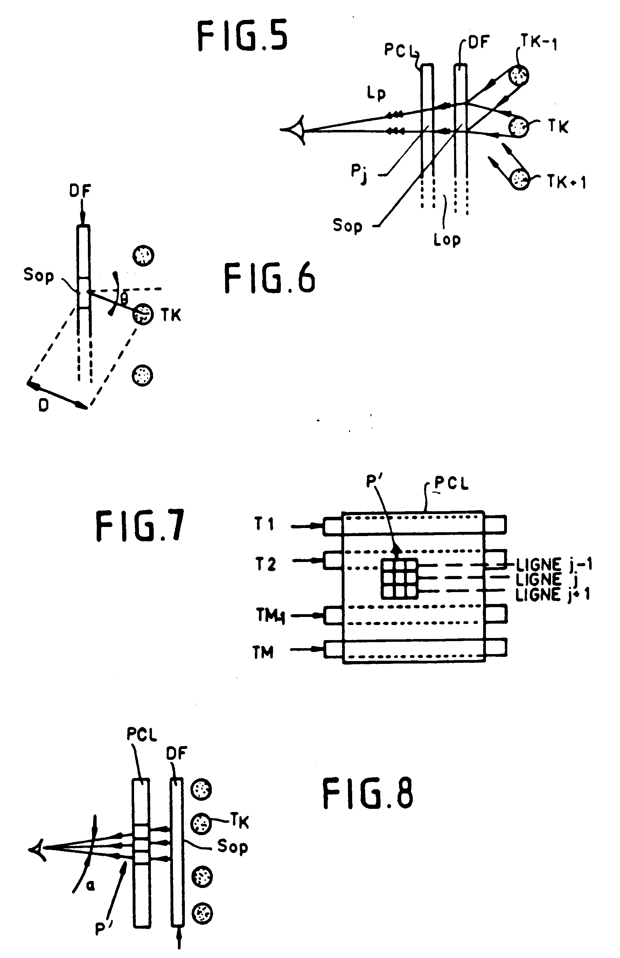

Les figures 5 et 6 montrent que la luminance arrière Lop éclairant un pixel Pj est égale à la somme pondérée des luminances des tubes fluorescents TK, TK-1, TK+1 voisins à la surface Sop du diffuseur DF eclairant le pixel considéré Pj du panneau à cristal liquide PCL. Cette pondération est fonction de la distance D de chaque tube à la surface Sop du diffuseur DF et de l'angle ϑ présenté entre la normale au diffuseur et la droite joignant le centre du tube au centre de la surface éclairante Sop.

D'autre part, il faut considérer que la distance habituelle d'observation d'un écran de visualisation est en général telle que l'oeil ne peut isoler un pixel de ses voisins. Ceci est représenté à l'aide des figures 7 et 8 ; l'oeil est sensible globalement à la luminance d'une plage entourant le pixel visé. Cette luminance est donc la somme des luminances de chacun des pixels constituant la plage. La valeur de l'angle "a" couvrant la plage est inférieure ou au plus égale à la résolution angulaire visuelle. Sur les figures 7 et 8 on a considéré que la plage correspondant à cette résolution visuelle est répartie sur trois lignes Lj, Lj-1 et Lj+1 et englobe trois pixels en ligne et trois pixels en colonne soit au total 9 pixels d'un écran ou panneau, PCL.

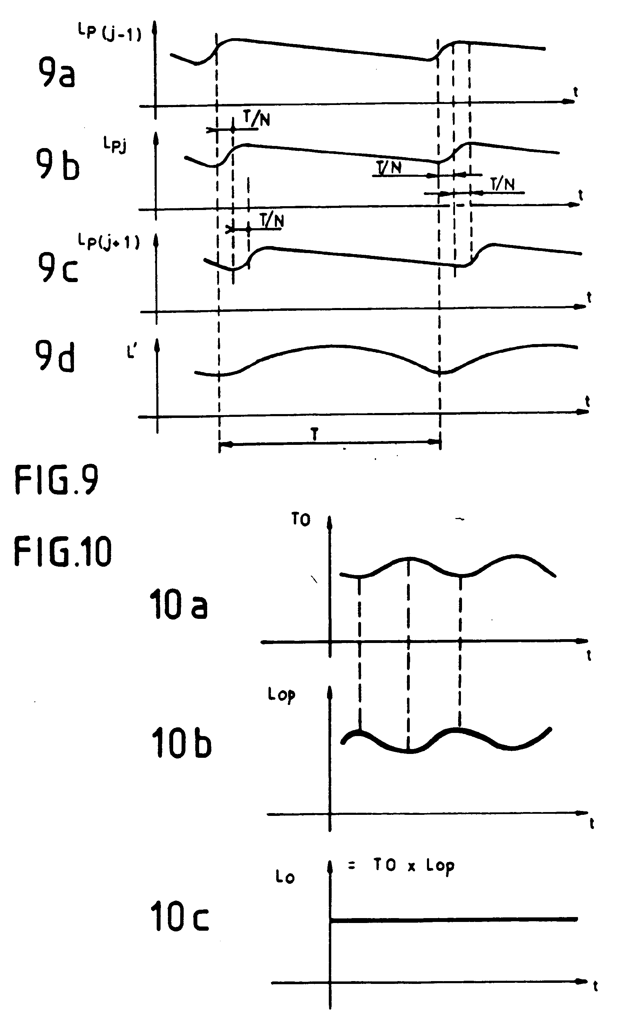

Pour une luminance fixe de l'éclairage arrière du panneau, la luminance instantanée de la plage répartie sur plusieurs lignes est la somme des luminances de chacun des pixels la constituant. La figure 9 représente la luminance de chaque pixel des trois lignes successives Lj-1, Lj, et Lj+1. La luminance de chaque pixel de la ligne Lj-1 est en avance de phase de la valeur T/N sur la luminance de chaque pixel de la ligne Lj (Figs. 9a,9b). Il en est de même pour la ligne Lj par rapport à la ligne Lj-1 (Figs. 9b,9c). La courbe 9d représente la luminance pondérée globale L' de la plage considérée ; cette luminance est en phase avec la luminance de la ligne centrale Lj sa variation relative est de ce fait moins brutale que pour chaque ligne considérée.

La variation cyclique à la période T d'image présentée par cette luminance L' produit pour l'oeil un phénomène de papillotement gênant.

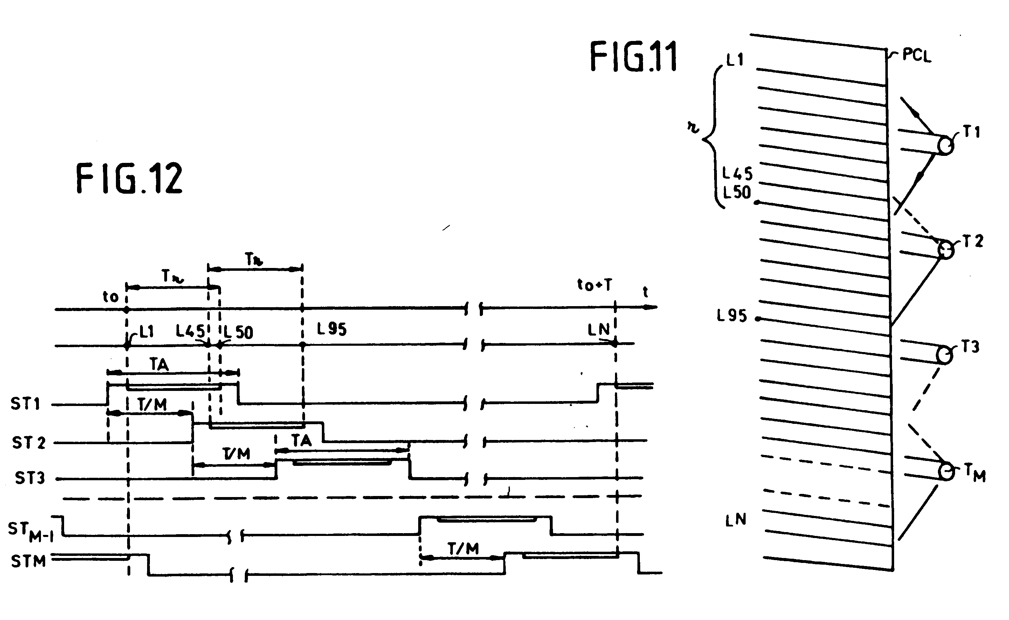

Pour y remédier, une luminance arrière, temporellement variable, est produite afin de compenser la variation de luminance de la plage L' et de donner une luminance résultante sensiblement constante. Ceci est résumé sur les courbes de la figure 10 : la courbe 10a reproduit la variation de transmission optique TO d'une plage de pixels englobant plusieurs lignes successives du panneau à cristal liquide, la courbe 10b représente la variation de luminance arrière Lop à émettre par la batterie de tubes en opposition de phase avec la variation TO précédente de manière à obtenir une luminance constante Lo selon la courbe 10c. Ce résultat est obtenu en élaborant une tension de modulation VBF cycliquement variable. Les générateurs 2 et 3 sont donc déterminés pour délivrer une tension de modulation synchrone du balayage du panneau et déphasée d'un tube au suivant. La modulation Vm et les déphasages sont déterminés de manière que l'ondulation relative de la luminance Lop de la surface Sop du diffuseur éclairant la plage P' soit approximativement l'opposé de la variation relative de la transmission optique TO de la plage P' (courbes 10a et 10c).

Les figures 11 et 12 illustrent ce procédé utilisé. Le dispositif comporte une batterie de M tubes fluorescents T1 à TM, disposés parallèlement à la direction des lignes L1 à LN des pixels de l'écran matriciel. Chaque tube éclaire une plage de "r" lignes, par exemple r = 50. Pour simplifier, le diffuseur n'est pas représenté, et on ne considère pas le lissage temporel et le retard apporté par les circuits de filtrage et d'intégration recevant les signaux ST. Les éclairements produits par les tubes successifs se chevauchent généralement dans les parties terminales des plages. Le déphasage à produire pour l'alimentation d'un tube au suivant est égal à T/M. La durée pendant laquelle chaque tube est activé à proximité de sa valeur maximale doit être suffisante pour englober l'intervalle de temps durant lequel les "r" lignes éclairées par ce tube sont elles-mêmes balayées au cours de la période de trame considérée. Sur la figure 12 on a représenté de manière plus explicite ces durées en montrant le décalage T/M entre l'alimentation d'un tube et celle du tube suivant. La durée TA d'alimentation maximale de chaque tube, répétée à la période de trame T, est choisie suffisamment grande pour englober le balayage de la plage de "r" lignes correspondante du panneau à cristal liquide. Ainsi, dans le cas du premier tube le signal ST1 de commande d'alimentation va au-delà de la durée Tr de balayage des lignes L1 à L50 éclairées par le tube T1. La plage TA est sensiblement centrée autour de la durée Tr. Il en est de même pour les tubes suivants T2 à TM.

Le raisonnement qui a été fait à l'aide de la figure 9 pour une petite plage P' de pixels est valable pour tous les pixels s'étendant sur les 3 lignes considérées et est également valable pour une plage de "r" lignes éclairées (r supérieur à 3) par un tube, étant entendu que la transmission globale de la zone de "r" lignes est la valeur pondérée de chaque ligne et est en phase avec la transmission moyenne des pixels de la ligne médiane (la ligne 25 dans le cas de la première plage éclairée par le tube T1). Le dispositif est par suite prévu pour commander la luminance de chaque tube au cours de la phase de temps to à to+Tr correspondante de manière opposée à la variation de transparence TO présentée par la plage "r" (Figs.10a et 10b). Ainsi l'observateur a l'impression de recevoir une luminance continue (courbe 10c) pour chacune des plages de "r" lignes de même transmission moyenne et donc pour l'ensemble de l'image de luminance uniforme au cours du balayage de durée T. Les fréquences nuisibles créatrices du phénomène de papillotement se trouvent ainsi diminuées.

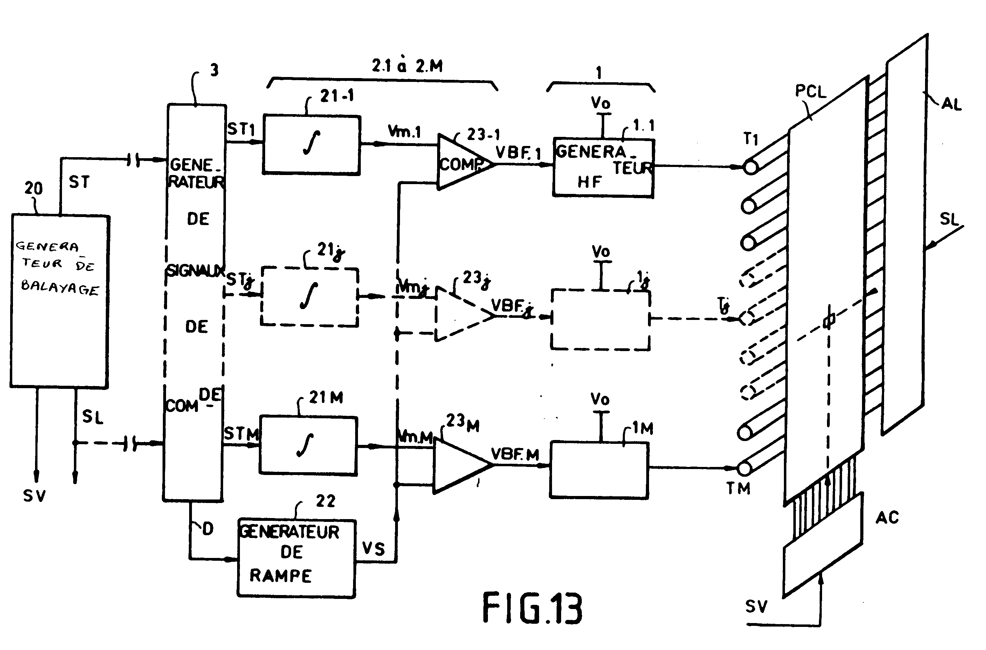

La figure 13 montre un panneau à cristal liquide PCL avec ses circuits d'adressage colonnes AC et lignes AL, et l'éclairage arrière comprenant une batterie de tubes T1 à TM parallèles à la direction des lignes. Un générateur de balayage 20 fournit les signaux de synchronisation lignes SL et trame ST et le signal vidéo SV. Ce dernier peut être constitué simplement par une information binaire pour exciter ou éteindre le pixel correspondant. Le générateur 3 de signaux de commande des tubes reçoit les signaux de synchronisation SL et ST et élabore à partir de ceux-ci les signaux déphasés ST1 à STM de commande d'alimentation des tubes T1 à TM. Par une sortie supplémentaire, D, il commande le générateur de rampe 22 à la fréquence BF désirée. Les autres circuits du générateur d'impulsions basse fréquence sont répartis sur M voies comportant chacune un intégrateur 21j et un circuit comparateur 23j. Ce dernier reçoit, par ailleurs, le signal commun de rampe VS. De même, l'alimentation HF est distincte pour chaque tube et est commandée par la sortie du comparateur 23j correspondant.

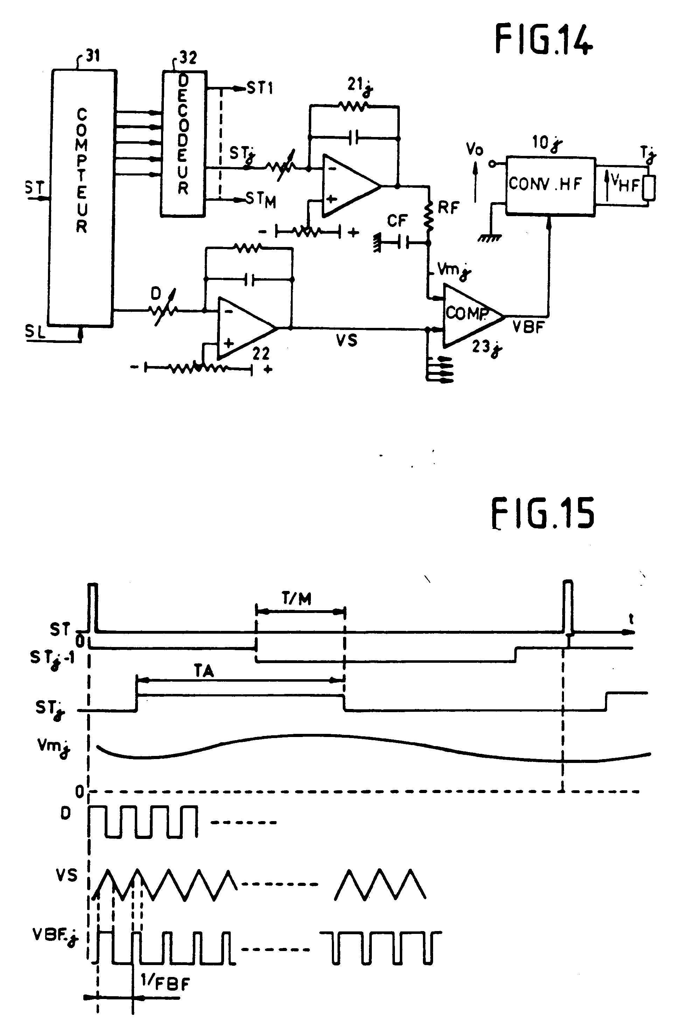

Dans l'exemple de réalisation selon la figure 14, le générateur de signaux de commande 3 est constitué par un compteur 31 suivi d'un décodeur 32. Le compteur 31 reçoit le signal de trame ST (Fig.15) qui remet le compteur à zéro à chaque balayage d'image. La synchronisation lignes SL représente un signal d'horloge qui incrémente le compteur. Le compteur 31 adresse en sortie un circuit décodeur 32 qui, en fonction du mot binaire d'adresse reçu, fournit les signaux d'alimentation ST1 à STM, pendant des intervalles de temps TA, en synchronisme avec le balayage, et avec un déphasage T/M entre eux (STj-1, STj fig.15). La voie "j" relative au tube Tj a été représentée, alimentée par le signal de synchronisation STj. Toutes les voies sont identiques recevant par ailleurs, du générateur de rampe 22, la sortie VS. Chaque voie comporte un circuit de filtrage passe-bas RF,CF, à la suite d'un intégrateur 21j et fournit la tension Vmj permettant de compenser la transmission de la zone éclairée par tube (fig.10). Le compteur lignes 31 fournit par ailleurs un bit de comptage D (fig.15) à la fréquence basse de modulation choisie. Ce signal logique est filtré par un montage intégrateur 22 délivrant la tension en dent de scie VS de même fréquence. La valeur moyenne et l'amplitude de modulation de VS sont ajustables par les réglages figurés. La tension VS est comparée à chacune des m tensions Vm par les m comparateurs 23.1 à 23M fournissant les tensions VBF.1 à VBFM attaquant les M convertisseurs 1.1 à 1M des M tubes T1 à TM. D'autres réglages relatifs à l'intégrateur 21j et à la valeur des éléments RF,CF sont mis en oeuvre lors d'une phase préléminaire pour ajuster la courbe Lop (Fig. 10b) souhaitée compensant l'ondulation de la courbe TO (Fig. 10a) et obtenir le résultat de luminance uniforme Lo (Fig. 10c).

Pour une image réelle réalisée sur l'écran la transmission d'un pixel quelconque varie en fonction du pixel considéré de la valeur TOmin à la valeur TOmax, ayant chacune une amplitude d'ondulation relative propre et encadrant la valeur TO précitée.

## Revendications

1. Procédé d'éclairage arrière d'un écran matriciel à cristal liquide utilisant M tubes fluorescents, où M est un entier supérieur à 1, pour éclairer l'arrière de l'écran et, pour chaque tube, une commande impulsionnelle périodique basse fréquence avec une largeur d'impulsion réglable pour moduler l'alimentation haute fréquence du tube considéré et faire varier sa luminance, caractérisé en ce que les tubes (T1 à TM) sont arrangés en une suite, parallèlement à la direction des lignes de la matrice, chaque tube éclairant une plage faite de lignes successives de pixels de l'écran, en ce que la variation de la largeur d'impulsion est déterminée pour obtenir un éclairage arrière temporellement variable et est synchronisée avec le balayage ligne par ligne des pixels de la matrice (PCL), et en ce que, pour cela, les tubes sont alimentés avec des décalages de T/M entre deux tubes consécutifs de la suite, T étant la période de rafraîchissement d'image, et une modulation de la largeur d'impulsion est déterminée, pour chaque tube, de manière que sa luminance soit sensiblement en opposition de phase avec la transmission optique moyenne de la plage de pixels éclairée par le tube considéré, afin d'obtenir en sortie de ladite plage et en considérant tous les pixels excités, une luminance sensiblement uniforme.

2. Procédé selon la revendication 1, caractérisé en ce que l'alimentation (TA) de chaque tube est effectuée périodiquement à la période de rafraîchissement d'image de l'écran et est choisie plus grande que la durée de balayage (Tr) de la plage de pixels éclairée par le tube considéré.

3. Dispositif d'éclairage arrière d'un écran matriciel à cristal liquide comportant M tubes fluorescents, où M est un entier supérieur à 1, pour éclairer l'arrière de l'écran, et pour commander l'intensité lumineuse, de chacun des tubes, un générateur haute fréquence (1) pour élaborer, à partir d'une tension continue locale, une tension d'alimentation alternative haute fréquence, et des moyens de modulation par tout ou rien de la tension d'alimentation haute fréquence pour obtenir une commande impulsionnelle périodique basse fréquence avec une largeur d'impulsion réglable, caractérisé en ce que les tubes (T1 à TM) sont disposés parallèlement à la direction des lignes de l'écran matriciel (PCL), chacun des tubes étant associé à son propre générateur haute fréquence (1j) et à des moyens de modulation (2.1 à 2.M), et en ce que le dispositif comporte en outre un générateur de signaux de commande des tubes (3) pour produire, à la période T de rafraîchissement d'image de l'écran , M signaux de commande (ST1 à STM) avec des déphasages entre eux de T/M, respectivement appliqués aux moyens de modulation (2.1 à 2.M), en sorte que l'ondulation de luminance de chaque tube soit en opposition de phase avec la transmission optique moyenne procurée par les pixels de la matrice situés en regard du tube considéré.

4. Dispositif selon la revendication 3, dans lequel les moyens de modulation (2) comportent un générateur de rampe (22) pour délivrer un signal de rampe (VS) à une cadence basse fréquence donnée, un circuit intégrateur (21j) pour produire, à partir d'un des signaux de commande, un signal de comparaison appliqué à une première entrée d'un comparateur (23j) recevant le signal de rampe par sa deuxième entrée et délivrant un signal de modulation basse fréquence par tout ou rien (VBF) au générateur haute fréquence (1j), caractérisé en ce que le générateur de signaux de commande des tubes (3) reçoit d'un générateur de balayage annexe (20) des signaux de synchronisation trame et ligne (ST et SL) et élabore lesdits signaux de commande des tubes (ST1 à STM) ainsi qu'un signal (D) appliqué au générateur de rampe pour produire le signal de rampe à la cadence basse fréquence donnée.

5. Dispositif selon la revendication 4, caractérisé en ce que le générateur de signaux de commande (3) comporte un circuit compteur (31) qui est réinitialisé par le signal de synchronisation trame, pour incrémenter le signal de synchronisation ligne et un circuit décodeur (32) couplé à une sortie du circuit compteur, pour fournir par M sorties les M signaux de commande (ST1 à STM) destinés à la commande d'intensité lumineuse des tubes (T1 à TM).

## Patentansprüche

1. Verfahren für die Hintergrundbeleuchtung eines Flüssigkristall-Matrixbildschirms, mit M Leuchtstoffröhren, wobei M eine ganze Zahl größer als 1 ist, um den Hintergrund des Bildschirms zu beleuchten, und einer niederfrequenten, periodischen Impulssteuerung mit einstellbarer Impulsbreite für jede Röhre zur Modulation der Hochfrequenzversorgung der betreffenden Röhre und zur Veränderung ihrer Leuchtdichte, dadurch gekennzeichnet, daß die Röhren (T1 bis TM) in einer zur Richtung der Zeilen der Matrix parallelen Reihe angeordnet sind, wobei jede Röhre einen durch aufeinanderfolgende Zeilen von Bildelementen des Bildschirms gebildeten Bereich beleuchtet, daß die Veränderung der Impulsbreite bestimmt wird, um eine zeitlich veränderliche und mit der zeilenweisen Abtastung der Bildelemente der Matrix (PCL) synchronisierte Hintergrundbeleuchtung zu erhalten, und daß hierzu die Röhren mit Zeitverschiebungen von T/M zwischen zwei aufeinanderfolgenden Röhren der Reihe versorgt werden, wobei T die Auffrischperiode des Bildes ist, und eine Modulation der Impulsbreite für jede Röhre so bestimmt wird, daß sich deren Leuchtdichte zum mittleren optischen Durchlaßgrad des von der betreffenden Röhre beleuchteten Bereichs von Bildelementen im wesentlichen in Gegenphase befindet, um am Ausgang des Bereichs und bei Betrachtung sämtlicher erregter Bildelemente eine im wesentlichen gleichmäßige Leuchtdichte zu erhalten.

2. Verfahren gemäß Anspruch 1, dadurch gekennzeichnet, daß die Versorgung (TA) einer jeden Röhre periodisch mit der Bildauffrischperiode des Bildschirms ausgeführt wird und größer als die Abtastdauer (Tr) des von der betreffenden Röhre beleuchteten Bereichs von Bildelementen gewählt ist.

3. Einrichtung für die Hintergrundbeleuchtung eines Flüssigkristall-Matrixbildschirms, mit M Leuchtstoffröhren, wobei M eine ganze Zahl größer als 1 ist, um den Hintergrund des Bildschirms zu beleuchten, und, zur Steuerung der Lichtstärke einer jeden der Röhren, einem Hochfrequenzgenerator (1) zum Entwickeln einer hochfrequenten Versorgungswechselspannung aus einer lokalen Gleichspannung, und Mitteln für die Alles-oder-Nichts-Modulation der Hochfrequenz-Versorgungsspannung, um eine niederfrequente, periodische Impulssteuerung mit einer einstellbaren Impulsbreite zu erhalten, dadurch gekennzeichnet, daß die Röhren (T1 bis TM) parallel zu der Richtung der Zeilen des Matrixbildschirms (PCL) angeordnet sind, wobei jede der Röhren ihr eigener Hochfrequenzgenerator (1j) und Modulationsmittel (2.1 bis 2.M) zugeordnet ist, und daß die Einrichtung außerdem einen Röhrensteuersignal-Generator (3) aufweist, um mit der Bildauffrischperiode T des Bildschirms M Steuersignale (ST1 bis STM) mit gegenseitigen Phasenverschiebungen von T/M zu erzeugen, die jeweils in die Modulationsmittel (2.1 bis 2.M) eingegeben werden, so daß sich die Welligkeit der Leuchtdichte einer jeden Röhre mit dem mittleren optischen Durchlaßgrad, der von den gegenüber der betreffenden Röhre befindlichen Bildelementen der Matrix geschaffen wird, in Gegenphase befindet.

4. Einrichtung gemäß Anspruch 3, in der die Modulationsmittel (2) versehen sind mit einem Rampengenerator (22), um ein Rampensignal (VS) mit gegebenem niederfrequenten Takt zu liefern, einer Integratorschaltung (21j), um anhand eines der Steuersignale ein Vergleichssignal zu erzeugen, das in einen ersten Eingang eines Komparators (23j) eingegeben wird, welcher an seinem zweiten Eingang das Rampensignal empfängt und ein niederfrequentes Alles-oder-Nichts-Modulationssignal (VBF) an den Hochfrequenzgenerator (1j) liefert, dadurch gekennzeichnet, daß der Röhrensteuersignal-Generator (3) von einem beigeordneten Abtastgenerator (20) Bild- und Zeilensynchronisationssignale (ST und SL) empfängt und die Röhrensteuersignale (ST1 bis STM) sowie ein in den Rampengenerator eingegebenes Signal (D) entwickelt, um das Rampensignal mit gegebenem, niederfrequentem Takt zu erzeugen.

5. Einrichtung gemäß Anspruch 4, dadurch gekennzeichnet, daß der Steuersignalgenerator (3) versehen ist mit einer Zählerschaltung (31), die durch das Bild-Synchronisationssignal reinitialisiert wird, um das Zeilensynchronisationssignal zu inkrementieren, und einer Dekodierschaltung (32), die mit einem Ausgang der Zählerschaltung verbunden ist, um über M Ausgänge die M Steuersignale (ST1 bis STM) auszugeben, die für die Steuerung der Lichtstärke der Röhren (T1 bis TM) bestimmt sind.

## Claims

1. Method of back lighting a liquid crystal matrix screen, using M fluorescent tubes, where M is an integer greater than 1, in order to illuminate the back of the screen and, for each tube, a low-frequency periodic pulse control with an adjustable pulse width for modulating the high-frequency power supply to the tube in question and varying its luminance, characterised in that the tubes (T1 to TM) are arranged in a series, parallel to the direction of the lines of the matrix, each tube lighting a region formed by successive lines of pixels of the screen, in that the variation of the pulse width is determined in order to bring about a time-varying back lighting and is synchronised with the line-by-line scanning of the pixels of the matrix (PCL), and in that, for that reason, the tubes are powered with shifts of T/M between two consecutive tubes of the series, T being the image refresh period, and a pulse width modulation is determined, for each tube, in such a way that its luminance is substantially in phase opposition with the mean optical transmission of the region of pixels lit by the tube in question, so that, taking all the excited pixels into consideration, a substantially uniform luminance is obtained at the output of the said region.

2. Method according to Claim 1, characterised in that power is supplied (TA) to each tube periodically at the image refresh period of the screen and is chosen to be greater than the scanning duration (Tr) of the region of pixels lit by the tube in question.

3. Device for back lighting a liquid crystal matrix screen including M fluorescent tubes, where M is an integer greater than 1, for lighting the back of the screen, and for controlling the luminous intensity of each of the tubes, a high-frequency generator (1) for producing, from a local DC voltage, a high-frequency alternating supply voltage, and means of all-or-nothing modulation of the high-frequency supply voltage to obtain a low-frequency periodic pulse control with an adjustable pulse width, characterised in that the tubes (T1 to TM) are arranged parallel to the direction of the lines of the matrix screen (PCL), each of the tubes being associated with its own high-frequency generator (1j) and with modulation means (2.1 to 2.M), and in that the device further includes a tube control signal generator (3) for producing, at the image refresh period T of the screen, M control signals (ST1 to STM) with mutual phase shifts of T/M, applied respectively to the modulation means (2.1 to 2.M), so that the fluctuation in luminance of each tube is in phase opposition with the mean optical transmission brought about by the pixels of the matrix situated facing the tube in question.

4. Device according to Claim 3, in which the modulation means (2) include a ramp generator (22) for delivering a ramp signal (VS) at a given low-frequency rate, an integrator circuit (21j) for producing, from one of the control signals, a comparison signal applied to a first input of a comparator (23j) receiving the ramp signal on its second input and delivering a low-frequency signal for all-or-nothing modulation (VBF) to the high-frequency generator (1j), characterised in that the tube control signal generator (3) receives, from an associated scanning generator (20), frame and line synchronisation signals (ST and SL) and derives the said tube control signals (ST1 to STM) as well as a signal (D) applied to the ramp generator to produce the ramp signal at the given low-frequency rate.

5. Device according to Claim 4, characterised in that the control signal generator (3) includes a counter circuit (31) which is re-initialised by the frame synchronisation signal, for incrementing the line synchronisation signal and a decoder circuit (32) coupled to an output of the counter circuit, for supplying, through M outputs, the M control signals (ST1 to STM) intended for control of the luminous intensity of the tubes (T1 to TM).
